# EUROPEAN PATENT APPLICATION

(11) **EP 1 942 393 A1**
(43) Date of publication of application: **09.07.2008**
(21) Application number: 07100161.4
(22) Date of filing: 05.01.2007
(51) Int. Cl.: G06F 1/16, G06F 3/023, G11B 27/00, H04L 29/08

(54) **Remote system for portable audio player**

(71) Applicant: Harron SA, 1028 Préverenges (CH)
(72) Inventor: Mamane, Dan, 1162 Saint-Prex (CH); Colot, Alexandre, 1025 St-Sulpice (CH)
(74) Representative: Leman Consulting S.A.

(57) **Abstract**

The present invention aims at enhancing the capacity of the remote device by adding the display of useful information on the remote device. The communication between the plug-in module and the remote is no longer unidirectional but now bidirectional.

This aim is achieved thanks to a remote system for portable audio player comprising a docking station and a remote device cooperating thereof, the docking station having interface means to electrically connect the portable audio player and a the remote device having keypad to give remotely commands to the portable audio player and wirelessly connected with the docking station, wherein the docking station comprises an wireless transmitter, an audio control module producing an audio signal and a microprocessor, said remote system comprising a wireless transmitter, a display, an authentication processor and a main processor, said main processor comprising selection means to sent messages to the portable audio player or the audio control module while sending commands to the docking station.

## Description

### Introduction

The present invention concerns the field of portable audio players and in particular the accessories dedicated to theses apparatus.

### Prior Art

Portable audio players have benefited of two major technological improvements, i.e. the availability of cheap storage device and the development of a new compression algorithm (MP3 from Fraunhofer Institute). Thanks to this algorithm, it was possible to store in digital format, an audio CD on about 50 Mbytes. Other compression algorithms are now supported such as Windows Media Audio (WMA) and Advanced Audio Codec (AAC). The trend is to include control function (DRM Digital Right Management) within the standard in order to restrict the use of such devices to legally acquired music. Portable audio players are made of a storage device, generally in static RAM (Flash memory, EEPROM) and an audio codec that transform the digital file into an audio signal. A display and a keypad help the user to select the appropriate title. The latest generation of players embed a colour screen allowing the user to watch video files. Despite the fact that the remaining description mentions only portable audio player, the present description covers both audio and video media players.

One of the most popular portable audio players is manufactured by Apple Computer and known under the name iPod®. This device is compact, light and battery powered. The huge development of this business as lead to propose various accessories around the iPod® such as FM Tuner or FM transmitter (that allow you to hear your favourite songs in the car audio device), or remote control that help you to remotely adjust the volume or start/pause the music. The list of accessories is available at www.apple.com/ipod/accessories.html. The majority of these remote devices are one-way, i.e. they put commands to the player. The remote control proposed by Apple allows the selection of the next or the previous title as well as the selection of the volume level. It is worth nothing that the remote device does not directly communicate with the player but rather with a plug-in module electrically connected with the player. This plug-in module can be the docking station or only an interface for the wireless communication with the remote device.

### Brief description of the invention

The present invention aims at enhancing the capacity of the remote device by adding the display of useful information on the remote device. The communication between the plug-in module and the remote is no longer unidirectional but now bidirectional.

This aim is achieved thanks to a remote system for portable audio player comprising a docking station and a remote device cooperating thereof, the docking station having interface means to electrically connect the portable audio player and a the remote device having keypad to give remotely commands to the portable audio player and wirelessly connected with the docking station, wherein the docking station comprises an wireless transmitter, an audio control module producing an audio signal and a microprocessor, said remote system comprising a wireless transmitter, a display, an authentication processor and a main processor, said main processor comprising selection means to sent messages to the portable audio player or the audio control module while sending commands to the docking station.

The plug-in module (or the docking station), electrically connected with the player, acts as wireless transmitter and router. This plug-in module comprises an audio codec that first convert the line output of the player into digital format and convert the digital format into analogue signal suitable for a headphone or a conventional audio amplifier system. The double conversion allows a complete control of the sound volume or coloration at the digital level. The remote device send therefore two types of commands, one dedicated to the player and the other one dedicated to the plug-in module to act on the audio output.

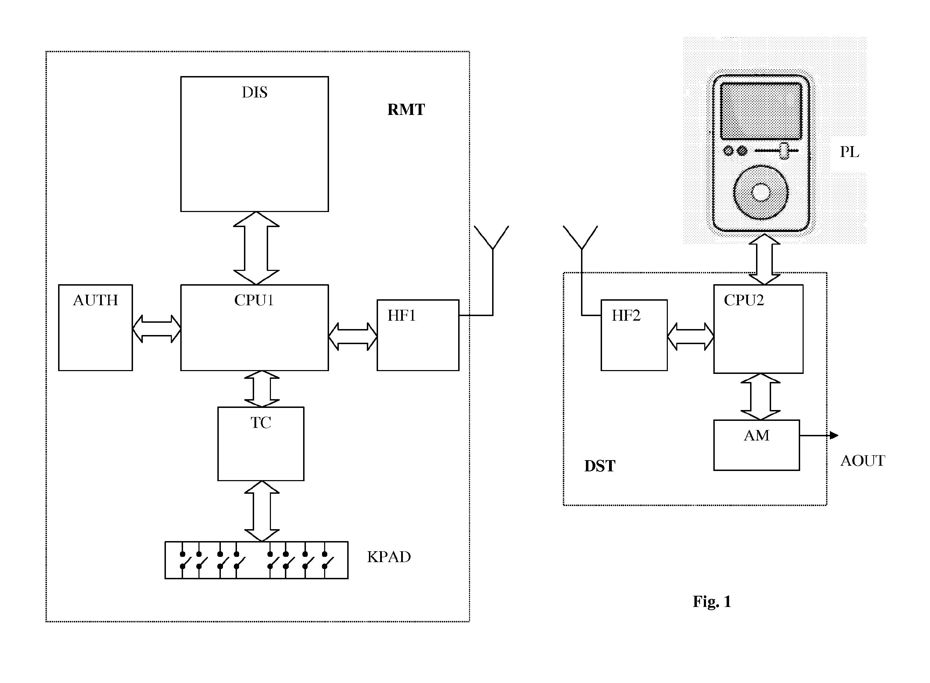

### Brief description of the figure

The present invention will be better understood thanks to the attached figure in which a block diagram of the main functions of the remote device.

### Detailed description of the invention

The attached figure shows the two elements that take part of the invention. The first part is the plug-in module. Since this module will also serve as recharging station, we will use the term "docking station" DST for this description. The docking station DST as previously explained is electrically connected with the player PL. The interface as well as the format is defined by the manufacturer of the player. In our case, the communication with the player uses the well known format RS-232. The kernel of the docking station is a microprocessor CPU2 that is in charge of :
- receiving the data packets sent from the remote device RMT, routing them either to the player PL or the audio control module AM
- receiving the data packets from the player PL and routing them to the transmission device HF2.

It is to be noted that the microprocessor CPU2 do not need to be powerful and a very simple one can afford the tasks mentioned. As the consequence, the docking station is very simple and cost effective. The amount of program to perform these operations is only a few Kbytes and since no complicated tasks is to be executed, this program can be hardwired (ROM) into the microprocessor. The microprocessor CPU2 transmits with the other internal elements via a SPI bus. This is a serial bus initially developed by Motorola. The data packets received from the high frequency module HF2 are not processed or interpreted. They are simply sent to the appropriate recipients.

According to a first embodiment, the high frequency module HF2 as well as the corresponding high frequency module HF1 of the remote device RMT uses two frequency channels to communicate. The first channel is dedicated to the communication from the remote device RMT to the audio control module AM of the docking station DST. The commands sent is this packet will act on the audio volume such as volume high, volume low or mute.

The second channel is used to send and receive packets with the player PL. This manner to address to different devices within the docking station is the simplest way.

According to another embodiment only one channel is used and the packet header comprises a flag that allow the proper routing of the packet. The content of the packet is not changed, only a header is added to determine the recipient.

On the remote device side, a similar high frequency module HF1 communicate wirelessly with the docking station DST. The packets received are transmitted to the main processor CPU1 which analyses them. The data sent by the player via the docking station contain the information about the song's titles stored within the player. The main processor CPU1 process these data and drive the display DIS. The content of the display is not necessarily a copy of the player's display but the presentation can be different e.g. depending of the display properties. The main processor CPU1 receives the user input from the touch controller TC which is connected to a keypad KPAD. Each time a switch is activated by the user, a packet is sent from the touch controller TC to the main processor CPU1. The management program of the main processor CPU1 will process the user's command and send the related data packets to the player or act locally.

In order to communicate with the player, the commands should be signed by an authentication processor AUTH. This processor is in charge of signing a message for the player. This processor contains secret keys for which the corresponding keys are stored in the player. Only the authentication processor can sign the message with these keys and not signed messages are rejected by the player. Once signed, the message cannot be changed and is directly transferred to the high frequency module HF1.

It is to be noted that the protocol used to communicate with the player is the same as used on the wireless communication. The same data packets are transmitted via the RS-232 interface from and to the player and transmitted by the high frequency module. The microprocessor CPU2 has no formatting to perform and act as gateway for the data.

In the same way as in the docking station, the main processor uses the two frequency channels while sending data to the docking station. In case that the user activate the volume increase button, the main processor format a message containing the new volume level and send this message through the first channel. This message does not need to be authenticated since the recipient is not the player. At the reception in the docking station, as previously explained, the message is routed to the audio control module AM. The command dedicated to the audio control module can comprises also sound coloration commands such as treble or bass modifications, balance left-right or any sound modification (loudness, equalizer etc).

In case that the user activates a scroll command, in order to visualize the next song, a message is prepared by the main processor CPU1 and passed to the authentication processor AUTH. The processor signs the message and the signed message is sent through the second frequency channel to the docking station DST.

At the reception, the docking station DST detects a new message arriving from the second channel and route it to the player.

The player sends the new information extracted from its internal database to the remote device through the docking station.

Depending of the amount of memory in the remote device RMT, the local commands can be executed without accessing the player. In case that all titles are loaded in the remote device's memory, the change of sort criteria from Title to Artist will be processed only locally. As a consequence, the next title command will have a different behaviour if activated from the remote device of activated directly on the player. The remote device sends a command to the player with the indication of the next title referenced by a unique number instead of simply sending a "next command".

It will be clear that the amount of processing power as well as the program size is high in the main processor since the various parameters displayed on the screen are fast changing. The program is preferably stored in flash memory in order to update the same later. For that purpose, the remote device comprises an USB port to be easily connected with a computer.

The fact that the authentication processor is located within the remote device is an important feature of the present invention. This processor is located where the processing power is anyway necessary. With this split between the docking station and the remote device, the elements needed are as low as possible thus leading to competitive manufacturing cost.

The docking station DST can also serve as docking station for the remote device. The latter is preferably powered with a rechargeable battery recharged while the remote device is plugged into the docking station.

The type of wireless communication between the remote device and the docking station is preferably based on 2.4 GHz band. However, other communication means such as Infra Red of other radio frequencies can be used.

## Claims

1. Remote system for portable audio player (PL) comprising a docking station (DST) and a remote device (RMT) cooperating thereof, the docking station having interface means to electrically connect the portable audio player and a the remote device (RMT) having keypad (KPAD) to give remotely commands to the portable audio player (PL) and wirelessly connected with the docking station (DST), wherein the docking station (DST) comprises an wireless transmitter (HF2), an audio control module (AM) producing an audio signal and a microprocessor (CPU2), said remote device (RMT) comprising a wireless transmitter (HF1), a display (DIS), an authentication processor (AUTH) and a main processor (CPU1), said main processor (CPUI1) comprising selection means to sent messages to the portable audio player (PL) or the audio control module (AM) while sending commands to the docking station (DST).

2. Remote system of claim 1, wherein the selection means comprises the use of two frequency channels between the remote device (RMT) and the docking station (DST), one being dedicated to the messages addressed to the portable audio player and the other one being dedicated to the messages addressed to the audio control module.

3. Remote system of claim 1 or 2, wherein the messages sent to the portable audio player are previously formatted by the authentication processor (AUTH) of the remote device (RMT) before being sent to the docking station (DST).

4. Remote system of claims 1 to 3, wherein the remote device is with a rechargeable battery powered and the docking station comprises means to electrically connect the remote device to recharge the rechargeable battery.

5. Remote system of claims 1 to 4, wherein the selection means comprise the use of a specific header on the messages sent the docking station identifying the destination of the message, said header being removed while passing the message to the recipient.

6. Remote system of claims 1to 5, wherein the message's format used between the portable audio player and the docking station is the same as used on the wireless level.

7. Remote system of claims 1 to 6, wherein the audio control module comprises an analogue to digital converter and a digital to analogue converter, the messages received from the remote device acting on the digital format of the audio signal.
